# EUROPÄISCHE PATENTSCHRIFT

(11) **EP 3 815 118 B1**
(45) Veröffentlichungstag und Bekanntmachung des Hinweises auf die Patenterteilung: **16.08.2023**
(21) Anmeldenummer: 19731149.1
(22) Anmeldetag: 03.06.2019
(51) Int. Cl.: H01F 30/16, H01F 27/02, H01F 27/255, H01F 27/26, H01F 27/28, H01F 27/30, H01F 27/32, H01F 27/36, H02M 3/00, H01F 27/08

(54) **TRANSFORMATOR MIT RINGKERN UND SYSTEM ZUR ELEKTRISCHEN VERSORGUNG EINER LAST**
RING CORE TRANSFORMER AND SYSTEM FOR SUPPLYING ELECTRICAL POWER TO A LOAD
TRANSFORMATEUR A NOYAU ANNULAIRE ET SYSTEME D'ALIMENTATION ELECTRIQUE D'UNE CHARGE

(30) Priorität: 29.06.2018 DE 102018005151
(43) Veröffentlichungstag der Anmeldung: 05.05.2021
(73) Patentinhaber: SEW-EURODRIVE GmbH & Co. KG, 76646 Bruchsal (DE)
(72) Erfinder: WOLF, Harald, 76698 Ubstadt-Weiher (DE)
(86) Internationale Anmeldenummer: PCT/EP2019/025168
(87) Internationale Veröffentlichungsnummer: WO 2020/001811

(56) Entgegenhaltungen:
- WO-A2-2009/146835
- CN-A- 106 328 362
- DE-A1- 10 053 373
- DE-A1- 10 258 765
- DE-A1-102007 050 265
- DE-A1-102008 019 318
- US-A1- 2013 076 476
- US-A1- 2017 032 879
- US-A1- 2017 110 238

## Beschreibung

Die Erfindung betrifft einen Transformator mit Ringkern und System zur elektrischen Versorgung einer Last.

Aus der EP 2 603 920 B1 ist ein Transformator bekannt.

Aus der US 2008 10 204 180 A1 ist ein Transformator mit Ringkern bekannt.

Aus der US 2002 / 0 017 976 A1 ist ein induktives Bauelement mit Ringkern bekannt. Aus der JP 4 523 389 B2ist ein Transformator mit toroidalem Kern bekannt.

Aus der DE 10 2012 202 472 A1 ist die Ausgestaltung von Ferritschichten bekannt. Aus der EP 1 933 339 A2 sind einen toroidalen Kern aufweisende Bauelemente bekannt.

Aus der US 2017/032879 A1 ist ein Wechselstromtransformator und seine Spannungsregulierungssteuerung bekannt.

Aus der WO 2009146835 A2 ist ein Transformator bekannt.

Aus der CN 106 328 362 A ist als nächstliegender Stand der Technik ein Transformator mit Ringkern bekannt.

Aus der US 2017/110238 A1 ist ein Kappensegment für einen toroidalen Transformator bekannt.

Aus der DE 10 2008 019318 A1 ist ein Anpasstransformator bekannt.

Aus der DE 102 58 765 A1 ist ein Frequenzumformer mit Lüfterkühlung bekannt.

Aus der DE 10 2007 050265 A1 ist ein System mit einem Resonanzverbraucher bekannt.

Aus der DE 100 53 373 A1 ist ein Verfahren zur berührungslosen Energieübertragung bekannt.

Aus der US 2013/076476 A1 ist eine Verbesserung einer Leistungsversorgung bekannt.

Der Erfindung liegt daher die Aufgabe zugrunde, einen Transformator mit Ringkern und ein System zur elektrischen Versorgung einer Last kompakt auszubilden.

Erfindungsgemäß wird die Aufgabe bei dem Transformator nach den in Anspruch 1 und bei dem System nach den in Anspruch 15 angegebenen Merkmalen gelöst.

Von Vorteil ist dabei, dass mittels des Flussleitkörpers der Streufluss gebündelt wird und somit die Streuinduktivität vergrößert wird. Außerdem wird somit ein Austreten von Feldlinien vermindert, also eine magnetische Abschirmung erreicht. Dies wiederum bewirkt, dass elektrisch leitfähige Materialien, wie beispielsweise Gehäuseteile aus Aluminium, in der Umgebung des Transformators dessen Streuinduktivität nur sehr wenig verringern. Die Streuinduktivität ist nutzbar für einen Resonanzschwingkreis, welcher dem Transformator sekundärseitig zugeschaltet wird, sodass ein Gyrator mit Anpasstransformator gebildet ist, also für eine als Last fungierende Impedanz eine Stromquelle bereitstellbar ist, die von einem als Spannungsquelle fungierenden Wechselrichter gespeist wird.

Bei einer vorteilhaften Ausgestaltung überlappen die von den insbesondere jeweils vollständigen Windungen der Primärwicklung überdeckten Umfangswinkelbereiche mit den von den insbesondere jeweils vollständigen Windungen der Teilwicklung der Sekundärwicklung überdeckten Umfangswinkelberiechen nur teilweise oder gar nicht. Von Vorteil ist dabei, dass eine erhöhte sekundärseitig konzentrierte Streufeldinduktivität, also die bei kurzgeschlossener Primärwicklung sekundärseitig messbare Induktivität, erreichbar ist. Insbesondere ist durch die Wahl der Position der Teilwicklungen der Sekundärwicklung in Relation zur Lage der Primärwicklung die Größe der Streuinduktivität L2 beeinflussbar, ohne die Windungszahlen der Wicklungen oder Teilwicklungen zu ändern. Je mehr Primärwicklung und Sekundärwicklung voneinander separiert sind, desto größer ist die Streuinduktivität. Damit ist die Gesamtimpedanz des Gyrators in weiten Bereichen einstellbar.

Bei einer vorteilhaften Ausgestaltung sind die Teilwicklungen der Sekundärwicklung elektrisch in Reihe oder parallelgeschaltet. Von Vorteil ist dabei, dass bei Parallelschaltung geringe Sekundärspannungen und somit hohe Ströme bereit stellbar sind. Außerdem ist bei Parallelschaltung und Reihenschaltung durch die unterschiedliche Verschaltung eine sehr, insbesondere um den Faktor Zwei, unterschiedliche Gyratorimpedanz herstellbar und der effektive Leitungsquerschnitt der Sekundärwicklung ist an die jeweilige Strombelastung anpassbar.

Durch die Parallelschaltung der Teilwicklungen ist ein von Eins abweichendes Übersetzungsverhältnis des Transformators ermöglicht, wobei alle Windungen mit einem einheitlichen Querschnitt ausführbar sind und trotzdem, beispielsweise bei Übersetzungsverhältnis des Transformators gleich Zwei, die Strombelastung oder Stromdichte in allen Windungen gleichbleibt.

Bei einer vorteilhaften Ausgestaltung sind innerhalb des jeweiligen Zwischenbereichs die dort vorhandenen Windungen der Primärwicklung in Umfangsrichtung regelmäßig voneinander beabstandet. Von Vorteil ist dabei, dass geringe Verluste, also ein hoher Wirkungsgrad des Transformators, bewirkbar ist.

Bei einer vorteilhaften Ausgestaltung weist der Flussleitkörper einen weiteren, insbesondere dritten, Ferritring auf, welcher koaxial zum Ringkern angeordnet ist und auf der vom ersten Ferritring abgewandten Seite des Ringkerns angeordnet ist,
wobei der weitere Ferritring axial beabstandet ist vom Ringkern samt Primärwicklung und Sekundärwicklung, insbesondere also der vom Ringkern samt Primärwicklung und Sekundärwicklung überdeckte axiale Bereich beabstandet ist von dem vom weiteren Ferritkern überdeckten axialen Bereich,
insbesondere
   - wobei die Wandstärke des weiteren Ferritrings in axialer Richtung kleiner ist als in radialer Richtung
   - und/oder wobei der vom weiteren Ferritkern überdeckte Radialabstandsbereich umfasst ist von dem vom Ringkern samt Primärwicklung und Sekundärwicklung überdeckten Radialabstandsbereich oder mit ihm überlappt.

Von Vorteil ist dabei, dass am Ringkerntransformator stirnseitig an der vom ersten Ferritkern abgewandten Seite des Ringkerns entgegen der axialen Richtung austretende Streuflussfeldlinien bündelbar sind zur Bildung einer hohen Streuinduktivität.

Bei einer vorteilhaften Ausgestaltung ist der zweite Ferritring aus einer Vielzahl von Ferritplatten zusammengesetzt, insbesondere welche jeweils tangential ausgerichtet sind. Von Vorteil ist dabei, dass eine kostengünstige Herstellung durch Nutzung von Massenprodukten ermöglicht ist.

Bei einer vorteilhaften Ausgestaltung sind die Ferritplatten insbesondere mittels beidseitig klebendem Klebeband an jeweils ebenen Oberflächenbereichen, insbesondere Kontaktflächen, eines Trägerteils angeordnet. Von Vorteil ist dabei, dass zwar eine Klebeverbindung erreicht ist, aber thermisch bedingte Längenänderungen keine Zerstörung des Flussleitkörpers oder des Trägerteils bewirken. Somit ist eine gegen Temperaturhübe beim Betrieb robuste Ausführung erreicht.

Bei einer vorteilhaften Ausgestaltung weist das Trägerteil, insbesondere als ein erstes

Kunststoffspritzgussteil ausgeführt, an seinem vom ersten Ferritring abgewandten axialen Endbereich einen radial hervorragenden Kragenbereich auf, welcher mit einem Halteblech verbunden ist insbesondere mittels Schrauben. Von Vorteil ist dabei, dass eine Montage am Halteblech in einfacher Weise ausführbar ist. dabei ist das Halteblech aus einem elektrisch leitfähigen Material, wie beispielsweise Aluminium oder Kupfer, ausführbar, so dass eine weiter verbesserte magnetische Abschirmung von magnetischen Wechselfeldern erreichbar ist.

Bei einer vorteilhaften Ausgestaltung umgibt das Trägerteil den Ringkern samt Primärwicklung und Sekundärwicklung radial,
wobei ein Domabschnitt eines Luftleitteils, insbesondere eines zweiten Kunststoffspritzgussteils, in den vom Ringkern radial umgebenen Raumbereich, so dass ein von einem Lüfter geforderter Luftstrom an der Primärwicklung und Sekundärwicklung entlang geleitet wird,
insbesondere wobei das Luftleitteil mit dem Halteblech verbunden ist, insbesondere mittels einer Schraube. Von Vorteil ist dabei, dass der Luftstrom des Lüfters radial innen und außen an den Wicklungen des Ringkerns vorbeiführbar ist.

Bei einer vorteilhaften Ausgestaltung ist das Halteblech wannenförmig und/oder trogförmig ausgeformt und weist an seinen Seitenflächen durchgehende Schlitze auf,
insbesondere wobei der Boden der Wanne oder des Trogs den Luftstrom zu den Seitenflächen hin umlenkt, insbesondere keine durchgehenden, den Luftstrom durchlassenden Ausnehmungen aufweist. Von Vorteil ist dabei, dass das Halteblech eine Umlenkung des im Wesentlichen axialen Luftstroms in radiale Richtung ermöglicht. Somit ist der Boden der Wanne oder des Trogs an einer Maschine oder an einer Schaltschrankwand befestigbar, wobei ein guter Wärmeübergang erreichbar ist oder es ist eine hohe Schutzart und eine hohe Schutzklasse des Transformators erreichbar.

Bei einer vorteilhaften Ausgestaltung bilden in Umfangsrichtung zwischen jeweiligen Teilwicklungen der Sekundärwicklung angeordnete Windungen der Primärwicklung eine jeweilige primärseitige Teilwicklung, deren Anschlüsse aus dem Transformator herausgeführt sind,
wobei diese primärseitigen Teilwicklungen zueinander unterschiedliche Windungszahlen aufweisen und/oder in Serie geschaltet sind,
insbesondere wobei die Teilwicklungen der Sekundärwicklung gleiche Windungszahlen aufweisen. Von Vorteil ist dabei, dass eine gewünschte Streuinduktivität herstellbar ist.

Bei einer vorteilhaften Ausgestaltung ist an dem vom Kragenbereich abgewandten axialen Endbereich des Trägerteils eine Lüfterhaube am Trägerteil ausgeformt oder mit dem Trägerteil verbunden,
wobei die Lüfterhaube den von einem Lüfter geförderten Luftstrom nach radial innen konzentriert, insbesondere lenkt. Von Vorteil ist dabei, dass der Luftstrom bündelbar ist nach radial innen und andererseits auch an der radialen Außenoberfläche der Wicklungen entlangleitbar ist. Außerdem ist ein quadratischen Lüftergehäuse des Lüfters verwendbar, da die Lüfterhaube zum Lüfter hin quadratisch geformt ist und zum Ringkern hin kreisförmig. Wichtige Merkmale bei dem System zur elektrischen Versorgung einer Last, insbesondere Impedanz, sind, dass das System einen von einem Wechselrichter gespeisten Transformator nach mindestens einem der vorangegangenen Ansprüche und eine Kapazität aufweist,
wobei die Kapazität parallel zur Sekundärwicklung des Transformators geschaltet ist,
wobei die Kapazität und die sekundärseitig konzentrierte Streufeldinduktivität des Transformators derart dimensioniert sind, dass die Resonanzfrequenz des so gebildeten Schwingkreises der Frequenz der von dem Wechselrichter dem Transformator zur Verfügung gestellten Wechselspannung insbesondere im Wesentlichen gleicht,
insbesondere wobei die Last ein in einer Anlage langgestreckt verlegte Primärleiterschleife, insbesondere ein in einer Anlage langgestreckt verlegter Primärleiter, ist, aus dem ein an eine Sekundärspule aufweisendes Fahrzeug induktiv mit elektrischer Leistung versorgbar ist.

Von Vorteil ist dabei, dass eine Stromquelle in einfacher Weise bereitstellbar ist. Hierbei ist als Speisung ein als Spannungsquelle fungierender Wechselrichter verwendbar, welcher einen Transformator mit Resonanzkreis speist. Somit ist ausgangsseitig eine Stromquelle bereit stellbar, die auch für eine Impedanz verwendbar ist, also nicht unbedingt für einen bloßen Ohm'schen Widerstand, sondern auch für eine einen Wirkwiderstand und einen Scheinwiderstand aufweisende Impedanz.

Weitere Vorteile ergeben sich aus den Unteransprüchen.

Die Erfindung wird nun anhand von schematischen Abbildungen näher erläutert:
In der Figur 1 ist ein System zur Versorgung einer Last Z, insbesondere Impedanz, aus einer durch einen Gyrator mit Transformator gebildeten, von einem Wechselrichter WR gespeisten Stromquelle.

In der Figur 2 ist der Transformator in Schrägansicht **schematisch** skizziert.

In der Figur 3 ist eine zur Figur 2 zugehörige Schnittansicht dargestellt.

In der Figur 4 ist eine Einheit mit dem Transformator **realistisch** in Schrägansicht explodiert dargestellt.

In der Figur 5 ist die Einheit in Schrägansicht dargestellt, wobei ein Lüfter 50 zusätzlich dargestellt. Ist.

In der Figur 6 ist ein Wicklungsschema für den Transformator dargestellt, wobei beispielhafte Streuflussfeldlinien angedeutet sind.

In der Figur 7 ist ein Wicklungsschema für den Transformator dargestellt, wobei sekundärseitige Teilwicklungen (61, 62) parallelgeschaltet sind.

In der Figur 8 ist ein Wicklungsschema für den Transformator dargestellt, wobei die sekundärseitigen Teilwicklungen (61, 62) im Unterschied zu Figur 7 weiter voneinander beabstandet sind, insbesondere in Umfangsrichtung.

In der Figur 9 sind am Ringkern 30 angeklebte Halteteile 48 zur Wicklungsführung und zum Halten des Ringkerntransformators dargestellt.

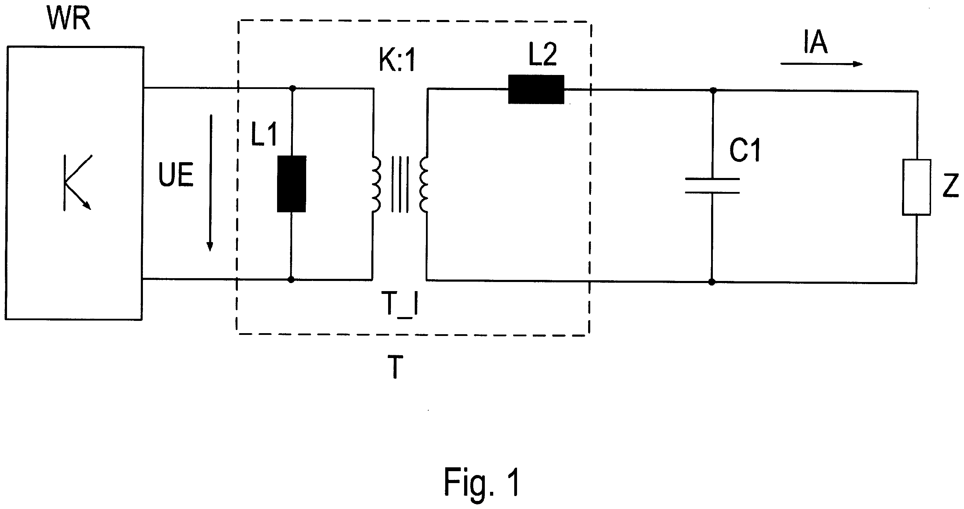

Wie in Figur 1 dargestellt, weist das erfindungsgemäße System Komponenten zur Versorgung einer Last Z, insbesondere Impedanz, auf. Dabei stellt ein Wechselrichter WR eine einphasige Wechselspannung zur Verfügung, welche als Eingangsspannung UE einer Wandlereinheit fungiert.

Diese Wandlereinheit erzeugt einen Strom IA zur Versorgung der Last Z.

Die Wandlereinheit weist eingangsseitig einen Transformator T auf, dessen Sekundärseite eine Kapazität C1 speist, welche parallel zur Last Z geschaltet ist.

In Figur 1 ist ein Ersatzschaltbild des realen Transformators T dargestellt, wobei dem idealen Transformator T _I primärseitig eine primärseitig konzentrierte Hauptfeldinduktivität L1 parallel und sekundärseitig eine sekundärseitig konzentrierte Streufeldinduktivität L2 in Reihe zugeschaltet ist.

Der ideale Transformator T_I weist das Übersetzungsverhältnis K auf.

L1 ist die Induktivität der Primärwicklung bei sekundärseitigem Leerlauf und L2 ist die Induktivität der Sekundärwicklung bei primärseitigem Kurzschluss. Das Übersetzungsverhältnis K ist das Leerlaufübersetzungsverhältnis von Primärspannung und Sekundärspannung und entspricht ungefähr dem Windungszahlverhältnis w1 zu w2 des realen Transformators. T.

Die Resonanzfrequenz des aus der sekundärseitig konzentrierten Streufeldinduktivität L2 und der Kapazität C1 gebildeten Schwingkreises entspricht der Frequenz der vom Wechselrichter bereit gestellten Wechselspannung.

Somit wird die Wandlereinheit aus einer durch den Wechselrichter realisierten Spannungsquelle gespeist und fungiert als Stromquelle für die Last Z.

Dabei ist die Last beispielsweise realisiert durch einen in einer Anlage langgestreckt verlegten Primärleiter, aus dem mittels einer an den Primärleiter induktiv gekoppelten Sekundärspule ein Verbraucher, wie Traktionsantrieb und/oder aufzuladender Energiespeicher eines Fahrzeugs berührungslos mit elektrischer Leistung versorgt wird.

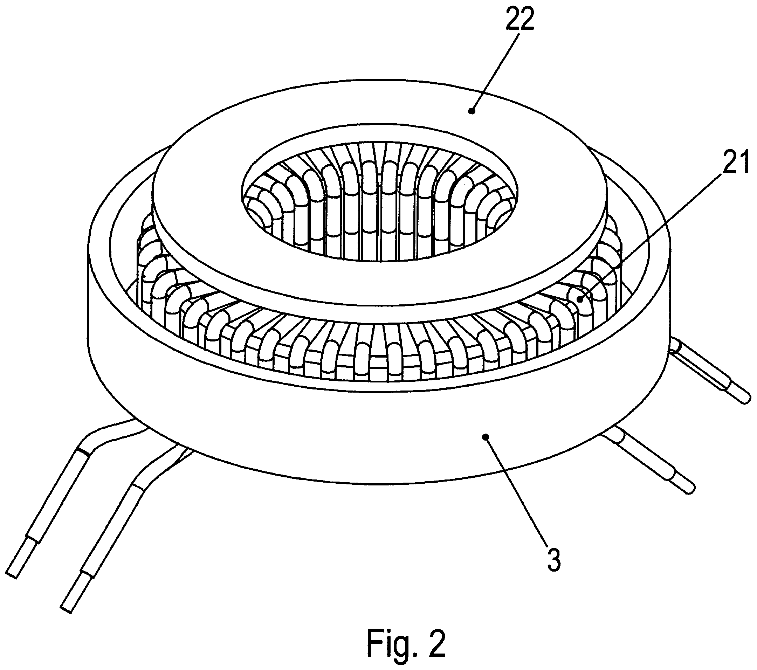

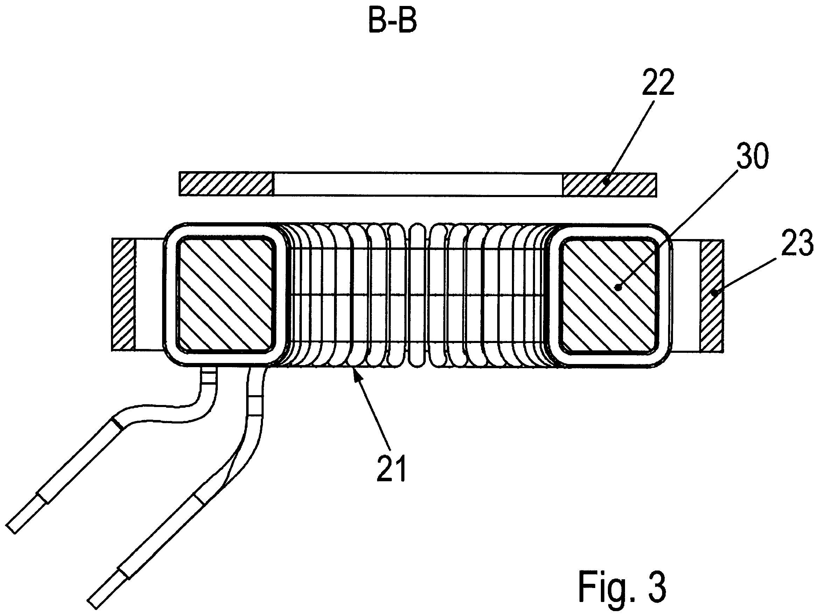

Wie in Figur 2 und Figur 3 schematisch dargestellt, ist der Transformator als Ringkerntransformator ausgeführt, auf dessen Ringkern 30 eine Primärwicklung und eine

Sekundärwicklung gewickelt sind. Dabei überlappen diese beiden Wicklungen 21 sich gar nicht oder bei anderen nicht gezeigten Ausführungsbeispielen höchstens teilweise.

Der Ringkern 30 ist aus Ferrit gefertigt.

Außerhalb, insbesondere radial außerhalb, des Ringkerns 30 und/oder der Wicklungen 21 ist ein erster Ferritkern 22 angeordnet und ein zweiter Ferritkern 23 angeordnet.

Dabei deckt der erste Ferritkern 22 eine Stirnfläche ab. Der zweite Ferritkern 23 deckt eine Mantelfläche ab.

Erfindungsgemäß sind dabei die Wicklungen 21 auf den Ringkern 30 gewickelt und außerhalb der Wicklungen 21 mittels Ferritköpern, wie erster Ferritring 22 oder zweiter Ferritring 23, wird der Streufluss verstärkt.

Somit ist also durch das Anordnen von zusätzlichem Ferritmaterial außerhalb der Wicklungen 21, insbesondere also außerhalb des von den Wicklungen umwickelten Raumbereichs, der Streufluss gezielt verstärkt und somit auch für die sekundärseitig konzentrierte Streufeldinduktivität L2 ein gewünschter Wert erreichbar.

Der Ringkern 30 ist vorzugsweise als Kreisring ausgeführt. Das zusätzliche Ferritmaterial ist in Figur 2 als erster Ferritring 22 ausgeführt oder als zweiter Ferritring 23 ausgeführt.

Dabei ist der erste Ferritring 22 mit einer größeren Wandstärke in radialer Richtung als in axialer Richtung ausgeführt.

Hingegen ist der zweite Ferritring 23 mit einer mit einer größeren Wandstärke in radialer Richtung als in axialer Richtung ausgeführt.

Der Ringkern 30 und jeder der beiden Ferritringe (22, 23) sind zueinander koaxial ausgerichtet, insbesondere weisen sie also dieselbe Ringachse auf.

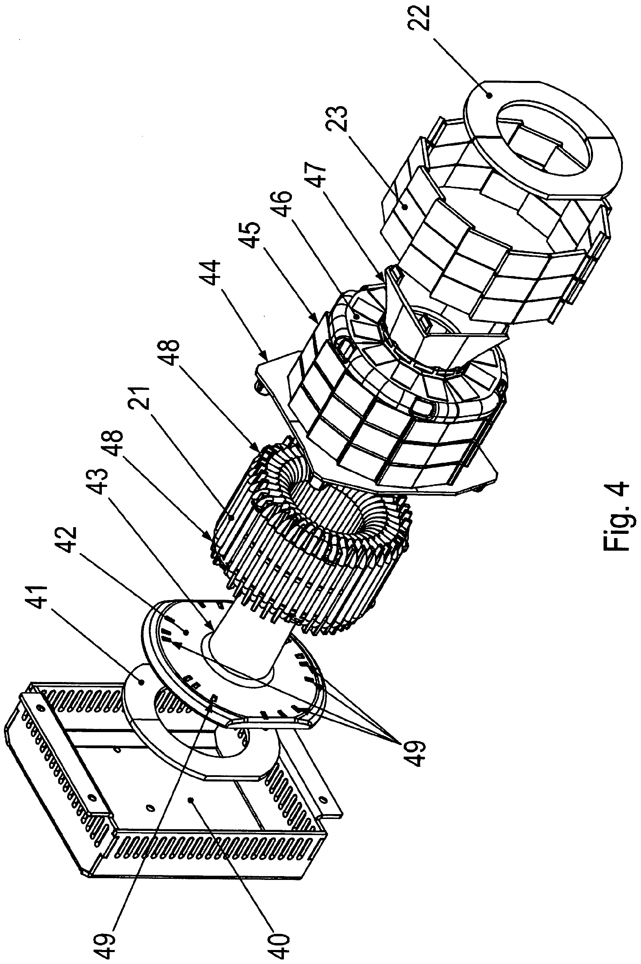

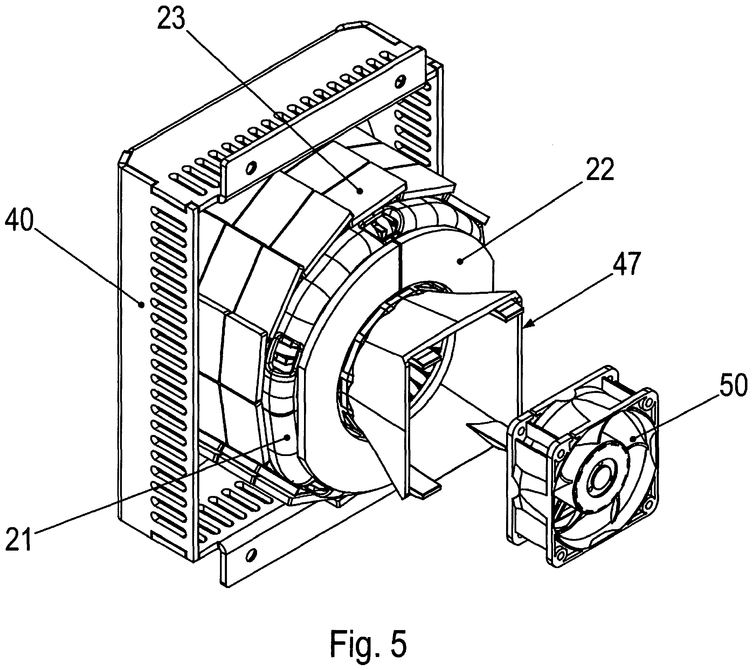

In Figur 4 und 5 ist eine realisierte Ausführung gezeigt, wobei der erste Ferritring 22 zweiteilig ausgeführt ist und der zweite Ferritring 23 aus einer Vielzahl von Ferritplatten zusammengesetzt ist. Auf diese Weise ist eine kostengünstige Herstellung erreichbar.

Ein Trägerteil 46 ist vorzugsweise als kunststoffspritzgussteil ausgeführt und weist ebene Flächenberieche, insbesondere also Kontaktflächen, auf zum Anbringen der Ferritplatten des zweiten Ferritrings 23. Bevorzugt werden die Ferritplatten des klebeverbunden mit dem Trägerteil 46, wobei als Klebemittel ein zweiseitig mit Klebstoff versehenes Klebeband verwendet wird. Somit sind die Ferritplatten auf die Kontaktflächen 45 nicht direkt aufgeklebt, sondern mittels Klebeband verbunden. Vorteil ist hierbei, dass bei Temperaturhüben während des Betriebs die somit auftretenden mechanischen Spannungen nicht zur Zerstörung der Ferritplatten führen.

An der vom ersten Ferritring 22 abgewandten Seite des Trägerteils 46 ist am Trägerteil ein radial hervorragender Kragenbereich 44 ausgebildet, welcher einerseits zur Luftleitung des vom Lüfter 50 geförderten Luftstroms beiträgt und andererseits auch mittels Schrauben mit einem Halteblech 40 verbunden ist. Hierzu sind in den vier hervorragenden Eckbereichen des Kragenbereichs 44 Bohrungen angeordnet.

An seiner dem ersten Ferritring 22 zugewandten Seite weist das Trägerteil 46 eine Lüfterhaube 47 auf, welche vorzugswiese als quadratischer Pyramidenabschnitt geformt ausgeführt ist.

Die Lüfterhaube 47 ist also trichterförmig ausgeführt und konzentriert den vom Lüfter 50 in die Lüfterhaube 47 hineingeförderten Luftstrom nach radial innen, so dass der Luftstrom auf den Ringkern 30 gelenkt wird.

Somit sind die Wicklungen 21 auf dem Ringkern 30 im Luftstrom angeordnet und entwärmbar.

Ein mittig einen sich axial erhebenden Domabschnitt 43 aufweisendes Luftleitteil 42 ist derart am Halteblech 40 mit einer durch den Domabschnitt 43 durchgehenden Schraube festgelegt, dass der Domabschnitt in den vom Ringkern 30 umgebenen Raumbereich hineinragt. Somit wird der Luftstrom effektiver an den Wicklungen 21 entlang gelenkt. Auf der vom Ringkern 30 abgewandten Seite des Luftleitteils 42 ist ein dritter Ferritring 41 angeordnet, welcher ebenfalls den Streufluss abschnittsweise leitet.

Das Halteblech 40 ist aus Aluminium ausgeführt.

Mittels des zusätzlichen Ferritmaterials, insbesondere also mittels des ersten, zweiten und dritten Ferritrings (22, 23, 41) ist auch eine verbesserte magnetische Abschirmung erreicht. Daher sind Wirbelströme in der Nähe angeordneter elektrisch leitfähiger Teile verringerbar. Auf diese Weise ist somit die Erwärmung solcher Teile verringerbar und daher auch die Brandgefahr.

Das Halteblech 40 ist trogförmig ausgeführt und weist an seinen Seiten, insbesondere also Seitenwänden des Trogs, Schlitze auf, so dass der vom Lüfter 50 geförderte Luftstrom nach radial außen herausleitbar ist.

Die radiale Richtung, die Umfangsrichtung werden hier stets auf die Ringachse des Ringkerns 30 bezogen, welche die axiale Richtung kennzeichnet.

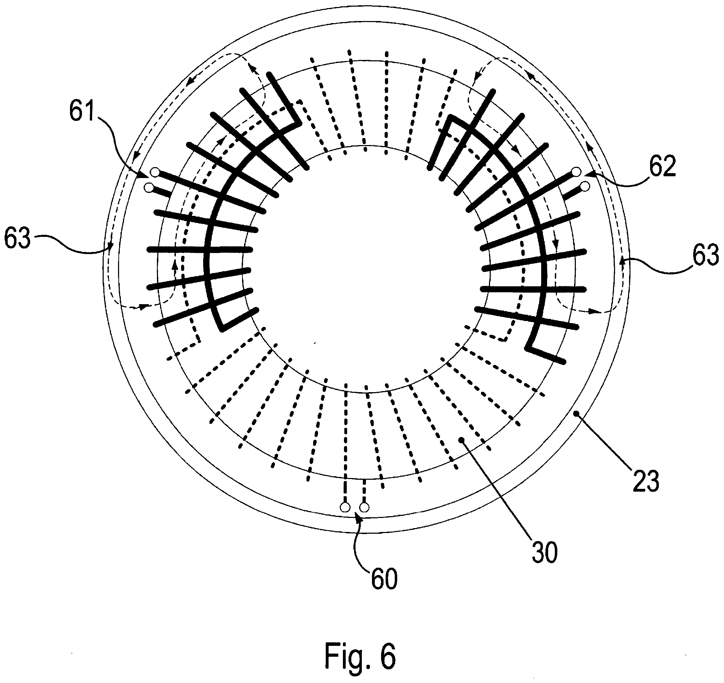

Wie in Figur 6 dargestellt ist, weist die Sekundärwicklung eine erste und eine zweite Teilwicklung auf, welche in auf den Ringkern bezogen Umfangsrichtung voneinander beabstandet sind, wobei im Beabstandungsbereich Windungen der Primärwicklung angeordnet sind.

In dem von der ersten Teilwicklung in Umfangsrichtung überdeckten Umfangswinkelbereich ist keine Windung der Primärwicklung angeordnet.

In dem von der zweiten Teilwicklung in Umfangsrichtung überdeckten Umfangswinkelbereich ist keine Windung der Primärwicklung angeordnet.

Wie in Figur 6 verdeutlicht am Beispiel zweier Feldlinien 63 des Streuflusses, wird der Streufluss zumindest teilweise durch den zweiten Ringkern 23 geführt oder rückgeführt. Auf diese Weise wird somit eine magnetische Abschirmwirkung einerseits und andererseits eine hohe zugehörige Induktivität, insbesondere Streufeldaktivität, L2 erreicht. Dabei besteht die Abschirmwirkung im Fernhalten von Feldlinien zur Umgebung hin.

Als auf dem Ringkern 30 angeordnete Wicklungen sind hierbei eine Primärwicklung und eine Sekundärwicklung vorgesehen. Die Anschlüsse 60 der Primärwicklung sind in Figur 6 im unteren Teil angedeutet.

Die Sekundärwicklung ist aus einer ersten und einer zweiten Teilwicklung gebildet. Dabei sind die Anschlüsse (61, 62) der beiden Teilwicklungen von dem Anschluss 60 der Primärwicklung in Umfangsrichtung beabstandet.

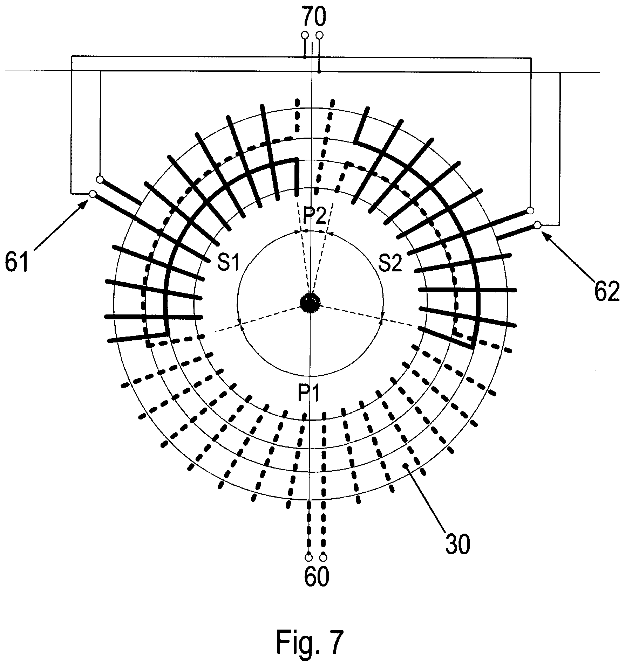

Wie in Figur 7 gezeigt, sind die beiden sekundärseitigen Teilwicklungen miteinander parallelgeschaltet. Dabei ist die Anzahl der Windungen der Teilwicklungen vorzugsweise gleich groß. Der Koppelfaktor der Primärwicklung zu den sekundären Teilwicklungen ist dann gleich. Bei deren Parallelschaltung werden dadurch Ausgleichsströme vermieden. Wichtig ist dabei, dass die sekundären Teilwicklungen untereinander beabstandet sind, also deren Windungen beispielsweise nicht bifilar gewickelt sind. Geringe Unterschiede in der Kopplung zur Primärseite bewirken dann keine großen Ausgleichsströme wie bei bifilar gewickelten sekundärseitigen Teilwicklungen. Werden die sekundären Teilwindungen stattdessen in Serie ergibt sich eine doppelt so große Gesamtimpedanz des Gyrators, da sich das Übersetzungsverhältnis des Transformators zwar halbiert aber die sekundärseitig konzentrierte Streuinduktivität vervierfacht. Somit ist allein durch die Verschaltung eine um den Faktor zwei unterschiedliche Gesamtgyratorimpedanz herstellbar.

Die beiden Teilwicklungen der Sekundärwicklung sind ebenso wie die Primärwicklung auf den Ringkern 30 gewickelt, jedoch sind die beiden Teilwicklungen in Umfangsrichtung voneinander beabstandet.

In den durch die Beabstandung in Umfangsrichtung entstandenen Zwischenbereichen sind Windungen der Primärwicklung angeordnet, insbesondere in derselben Wicklungslage. Der Wicklungsdraht der Primärwicklung ist im von den Teilwicklungen in Umfangsrichtung überdeckten Bereich unterhalb der jeweiligen Teilwicklung verlegt, also auf konstantem Radialabstand verlegt, insbesondere axial zwischen Ringkern und jeweiliger Teilwicklung.

Wie in Figur 7 dargestellt, ist einer der beiden Zwischenbereiche sehr kurz. Er weist nur zwei Windungen der Primärwicklung auf. Entsprechend weiter ist der andere Zwischenbereich in Umfangsrichtung ausgedehnt und weist fünfzehn Windungen auf.

Vorzugsweise sind die Zwischenbereiche von den Windungen der Primärwicklung gleichmäßig belegt, insbesondere sind also die Windungen der Primärwicklung in Umfangsrichtung in jedem der Zwischenbereiche voneinander regelmäßig beabstandet.

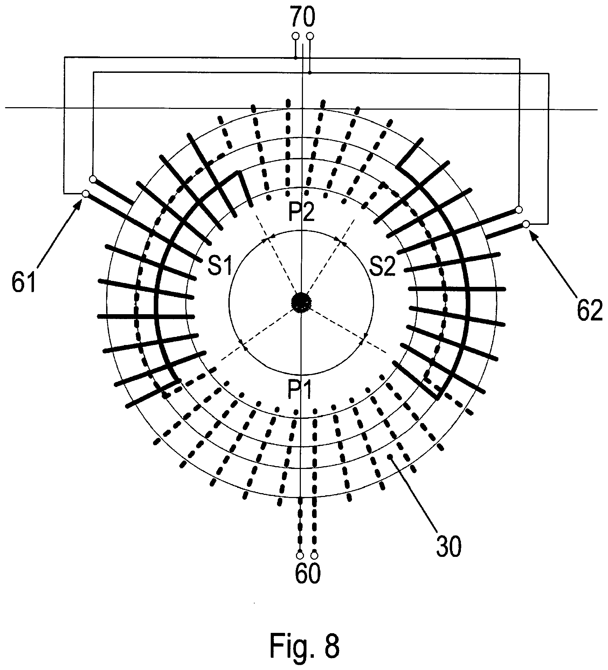

Wie in Figur 8 dargestellt, sind die Teilwicklungen im Unterschied zur Figur 7 in Umfangsrichtung anders voneinander beabstandet. Der erste Zwischenberiech weist hier sechs Windungen und der zweite Zwischenbereich weist hier elf Windungen auf. Die Streuinduktivität des gemäß Figur 7 ausgeführten Transformators ist größer als die Streuinduktivität eines gemäß Figur 8 ausgeführten Transformators.

Wichtig ist also, dass die Teilwicklungen der Sekundärwicklung in Umfangsrichtung voneinander beabstandet sind, elektrisch miteinander in Reihe oder parallel verschaltet sind und die durch die Beabstandung gebildeten Zwischenbereiche Windungen der Primärwicklung aufweisen. Die zusätzlichen Ferrite bündeln nach außen austretende Feldlinien.

In den Figuren 7 und 8 sind die Umfangswinkelbereiche der Zwischenbereiche mit P1 und P2 bezeichnet, die die Umfangswinkelbereiche der Teilwicklungen mit S1 und S2. Je gleichmäßiger sich die Winkelbereiche der Primärwicklung P1, P2 ... mit den Winkelbereichen der Sekundärwicklung S1, S2 ...abwechseln desto geringer fällt die Streuinduktivität aus. Je separierter die Winkelbereiche angeordnet sind desto größer ist die Streuinduktivität. Bei gleichen Windungszahlverhältnissen kann also allein durch die Anordnung der Wicklungen eine sehr unterschiedliche Streuinduktivität erzielt werden.

Die Zwischenbereiche sind somit bevorzugt gleichmäßig belegt von der Primärwicklung.

Die Anzahl der Windungen der Teilwicklungen ist dabei vorzugsweise gleich groß.

Da in dem Ausführungsbeispiel gemäß Figur 8 die sekundärseitigen Teilwicklungen (61, 62) im Unterschied zu Figur 7 weiter voneinander beabstandet sind, insbesondere in Umfangsrichtung, resultiert daraus eine geringere Streuinduktivität. Beispielhaft ergibt sich bei den abgebildeten Verhältnissen eine um den Faktor 1,4 größere Streuinduktivität als bei einem gemäß den Verhältnissen in Figur 7 ausgeführten Ausführungsbeispiel.

Bei weiteren erfindungsgemäßen Ausführungsbeispielen ist die Sekundärwicklung nicht aus zwei, sondern aus mehr als zwei Teilwicklungen gebildet, die in Reihe und/oder parallel zueinander verschaltet sind.

Die Anzahl der Windungen der Teilwicklungen ist dabei vorzugsweise gleich groß. Die Teilwicklungen sind bezüglich der Primärwicklung symmetrisch angeordnet.

Der Ringkern 30 ist vorzugsweise aus Ferrit gefertigt.

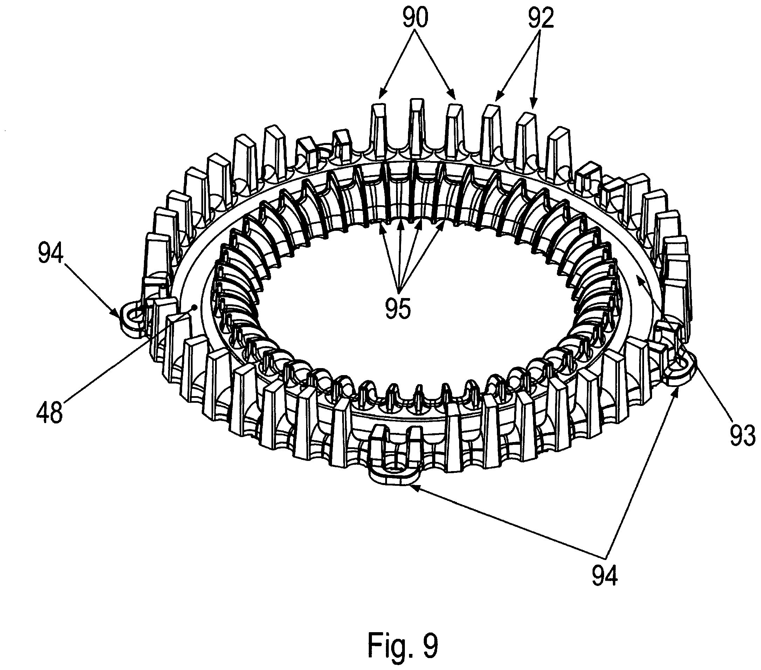

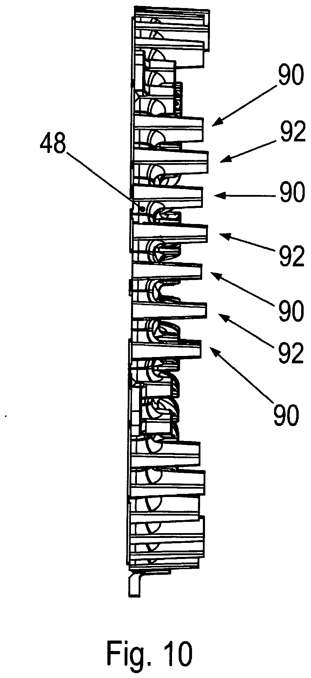

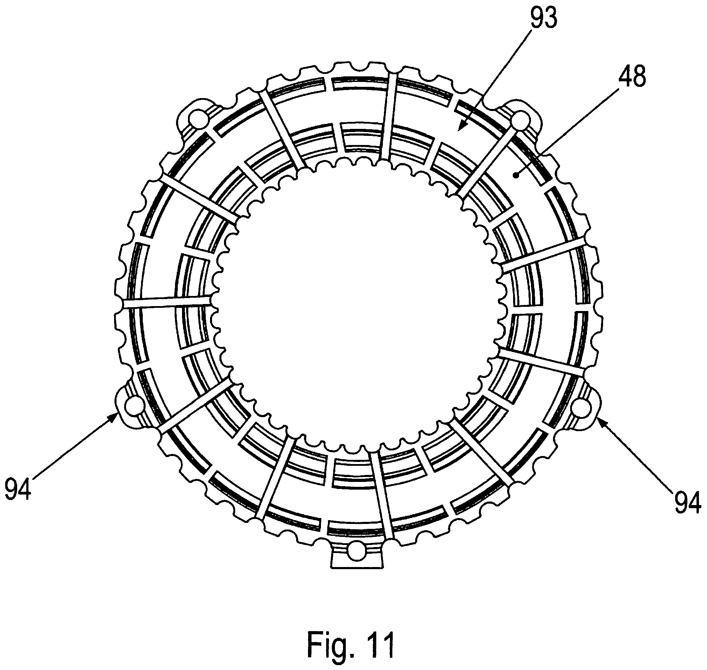

Wie in Figur 9 dargestellt, ist an den beiden Stirnseiten des Ringkerns 30 jeweils ein Halteteil 48 angeklebt. Dabei wird der Ringkern 30 beispielsweise aus zwei miteinander zu verklebenden Ringkernteilen hergestellt, an deren axial voneinander abgewandten Endbereichen jeweils eines der beiden Halteteile 48 angeordnet, insbesondere angeklebt, sind.

Die beiden Halteteile 48 sind baugleich, also identisch zueinander, ausgeführt.

Das dem Luftleitteil 42 zugewandte Halteteil 48 weist zum Luftleitteil 42 hin axial hervorragende Abstützpfosten 90 und Codierpfosten 92 auf, wobei in Umfangsrichtung diesen Abstützpfosten 90 und Codierpfosten 92 Vertiefungen 91 angeordnet sind. Dabei sind die Windungen der Wicklungen in den Vertiefungen 91 und Rillen 95 geführt und gehalten, wobei die rillen 95 an der Innenseite des ringförmigen Halteteils 48 ausgeformt sind. Somit ist ein sehr präzises

Wickeln ermöglicht, so dass die Streufeldinduktivität nur eine geringe Fertigungstoleranz aufweist, also hoch genau erzeugbar ist.

Die Codierpfosten 92 ragen axial weiter am Halteteil 48 hervor als die Abstützpfosten 90. Denn die Abstützpfosten 90 liegen an dem Luftleitteil 42 an und die Codierpfosten 92 ragen Ausnehmungen 49 des Luftleitteils 42 hinein. Auf diese Weise wird über die Abstützpfosten 90 Kraft übertragen und über die Codierpfosten 92 eine Verdrehsicherung und eineindeutige Festlegung der Winkellage des Halteteils 48 relativ zum Luftleitteil 42 bewirkt. Die Ausnehmungen 49 sind also auf demselben Radialabstand wie die Codierpfosten 92 angeordnet. Die Codierpfosten 92 sind in Umfangsrichtung unregelmäßig angeordnet, also nicht regelmäßig in stets gleichen Winkelabständen.

An der dem Trägerteil 46 zugewandte Stirnseite des Ringkerns 30, also im Beispiel an dem anderen Ringkernteil, ist ebenfalls ein solches Halteteil 48 angeordnet, dessen Abstützpfosten 90 und Codierpfosten 92 zum Trägerteil 46 hin hervorragen und mit diesem verbunden sind, insbesondere zum mechanischen Halten und Positionieren des Ringkerntransformators. In den in Umfangsrichtung zwischen den jeweils zueinander nächstbenachbarten Abstützpfosten 90 und Codierpfosten 92 gebildeten Vertiefungen 91 sind die Windungen geführt und gehalten.

Die Halteteile 48 sind also bevorzugt als ringförmige Teile mit axial hervorragenden Vorsprüngen, insbesondere Abstützpfosten 90 und Codierpfosten 92, als Kunststoffspritzgussteile ausgeführt.

Das Trägerteil 46 weist ebenfalls Ausnehmungen auf, in welche die Codierpfosten 92 hineinragen. Die Abstützpfosten 90 des Halteteils 48 stützen sich an einer in Figur 4 nicht sichtbaren Fläche ab, in welcher die Ausnehmung angeordnet sind. Jedoch sind die Ausnehmungen von den Abstützpfosten 90 beabstandet.

Beide Halteteile 48 weisen an ihrem Außenumfang Ösen 94 auf, an welchen aus den Wicklungen herausgeführte Wicklungsdrähte befestigt sind, insbesondere ein jeweiliger Wicklungsdraht durch die jeweilige Öse 94 durchgeführt ist.

Bei der Herstellung des Ringkerns werden vor Bewickelung des Ringkerns 30 und vor Klebeverbindung der Ringkernteile und/oder Halteteile 48 die Ösen 94 zur Befestigung von Distanzmitteln, welche die Ringkernteile beziehungsweise die Halteteile 48 voneinander axial
beabstanden. Während des Klebeverbindens, insbesondere Aushärten eines Klebstoffs wird somit die Beabstandung gesichert und fixiert.

Nach Herstellen der Klebeverbindung werden die Distanzmittel entfernt und danach die Bewicklung ausgeführt, wobei die Endbereiche von Wicklungsdrähten an den Ösen 94 befestigt werden.

Die Halteteile 48 weisen auch jeweils einen in Umfangsrichtung umlaufender Kanal 93 auf, in welchem Wicklungsdraht zur Verbindung von Teilwicklungen in Umfangsrichtung eingelegt ist.

Vorzugsweise ist das Halteteil samt den Abstützpfosten 90, den Vertiefungen 91, den Codierpfosten 92, dem in Umfangsrichtung umlaufende Kanal 93, der Ösen 94 und der Rillen 95 einstückig ausgeführt, insbesondere als Kunststoffspritzgussteil.

Insbesondere sind der Kragenbereich 44, das Trägerteil 46 und die Lüfterhaube 47 einstückig ausgeführt, insbesondere als Kunststoffspritzgussteil.

Bei weiteren erfindungsgemäßen Ausführungsbeispielen wird ein dritter Ferritkern an der anderen Stirnfläche angeordnet. Es sind aber auch andere Positionierungen der Ferritringe (22, 23) möglich, sofern unter Anspruch 1 fallend.

Bei weiteren erfindungsgemäßen Ausführungsbeispielen wird ein dritter Ferritkern, der vorzugsweise baugleich zum ersten Ferritkern 22ist, an der vom ersten Ferritkern 22 abgewandten Seite des Ringkerns 30 angeordnet, insbesondere symmetrisch zur Symmetrieebene und/oder Ringebene des Ringkerns 30.

Bei weiteren erfindungsgemäßen Ausführungsbeispielen ist in Umfangsrichtung auch ein teilweises Überlappen einer jeweiligen Teilwicklung mit der Primärwicklung ausführbar.

### Bezugszeichenliste

21 Primärwicklung und Sekundärwicklung
22 erster Ferritring
23 zweiter Ferritring
30 Ringkern
40 Halteblech
41 dritter Ferritring
42 Luftleitteil
43 Domabschnitt
44 Kragenbereich
45 ebene Kontaktflächen
46 Trägerteil
47 Lüfterhaube, insbesondere quadratischer Pyramidenabschnitt
48 Halteteil
49 Ausnehmungen
50 Lüfter
60 Anschluss Primärwicklung
61 Anschluss der ersten Teilwicklung der Sekundärwicklung
62 Anschluss der zweiten Teilwicklung der Sekundärwicklung
63 beispielhafte Streuflussfeldlinie
70 Anschluss Sekundärwicklung
90 Abstützpfosten, axial hervorstehend aus Halteteil 48
91 Vertiefung, insbesondere in Umfangsrichtung zwischen Abstützpfosten 90
92 Codierpfosten, axial hervorstehend aus Halteteil 48
93 in Umfangsrichtung umlaufender Kanal
94 Ösen
95 Rillen
WR Wechselrichter
UE Eingangsspannung, insbesondere vom Wechselrichter WR zur Verfügung gestellte Spannung
T Ersatzschaltbild für den realen Transformator
L1 primärseitig konzentrierte Hauptfeldinduktivität
L2 sekundärseitig konzentrierte Streufeldinduktivität
T_I idealer Transformator
C1 Kapazität
K Leerlaufspannungs-Übersetzungsverhältnis des idealen Transformators
IA Ausgangsstrom des Gyrators
Z Impedanz, Last

## Patentansprüche

1. Transformator mit Ringkern (30),
wobei der Transformator eine Primärwicklung (21) und eine Sekundärwicklung (21) aufweist, welche auf dem Ringkern gewickelt sind,
**wobei** die Sekundärwicklung (21) Teilwicklungen (S1, S2) aufweist,
wobei die Teilwicklungen in Umfangsrichtung des Ringkerns voneinander beabstandet, insbesondere voneinander regelmäßig beabstandet, sind,
wobei die in Umfangsrichtung zwischen den Teilwicklungen vorhandenen Zwischenbereiche Windungen (P1, P2) der Primärwicklung (21) aufweisen,
wobei der Transformator einen Flussleitkörper aufweist, welcher außerhalb des von der Primärwicklung (21) und von der Sekundärwicklung (21) umwickelten Raumbereichs angeordnet ist und außerhalb des Ringkerns,
wobei
der Flussleitkörper einen ersten Ferritring (22) aufweist, welcher koaxial zum Ringkern angeordnet ist,
wobei der erste Ferritring (22) axial beabstandet ist vom Ringkern samt Primärwicklung (21) und Sekundärwicklung (21),
wobei die Wandstärke des ersten Ferritrings (22) in axialer Richtung kleiner ist als in radialer Richtung,
wobei der Flussleitkörper einen zweiten Ferritring (23) aufweist, welcher koaxial zum Ringkern angeordnet ist,
wobei die Wandstärke des zweiten Ferritrings (23) in radialer Richtung kleiner ist als in axialer Richtung
wobei der vom zweiten Ferritkern überdeckte Radialabstandsbereich beabstandet ist von dem vom Ringkern samt Primärwicklung (21) und Sekundärwicklung (21) überdeckten Radialabstandsbereich,
wobei der vom zweiten Ferritkern überdeckte axiale Bereich umfasst ist von dem vom Ringkern samt Primärwicklung (21) und Sekundärwicklung (21) überdeckten axialen Bereich oder mit ihm überlappt.

2. Transformator nach Anspruch 1,
**dadurch gekennzeichnet, dass**
die von den insbesondere jeweils vollständigen Windungen der Primärwicklung (21) überdeckten Umfangswinkelbereiche mit den von den insbesondere jeweils vollständigen Windungen der Teilwicklungen überdeckten Umfangswinkelbereichen nur teilweise oder gar nicht überlappen.

3. Transformator nach mindestens einem der vorangegangenen Ansprüche,
**dadurch gekennzeichnet, dass**
die Teilwicklungen der Sekundärwicklung (21) elektrisch in Reihe oder parallelgeschaltet sind und/oder dass Sekundärwicklung (21) und Primärwicklung (21) in derselben Wicklungslage angeordnet sind.

4. Transformator nach mindestens einem der vorangegangenen Ansprüche,
**dadurch gekennzeichnet, dass**
innerhalb des jeweiligen Zwischenbereichs die dort vorhandenen Windungen der Primärwicklung (21) in Umfangsrichtung regelmäßig voneinander beabstandet sind.

5. Transformator nach mindestens einem der vorangegangenen Ansprüche,
**dadurch gekennzeichnet, dass**
der vom ersten Ferritkern (22) überdeckte Radialabstandsbereich umfasst ist von dem vom Ringkern samt Primärwicklung (21) und Sekundärwicklung (21) überdeckten Radialabstandsbereich oder mit ihm überlappt.

6. Transformator nach mindestens einem der vorangegangenen Ansprüche,
**dadurch gekennzeichnet, dass**
der vom Ringkern samt Primärwicklung (21) und Sekundärwicklung (21) überdeckte axiale Bereich beabstandet ist von dem vom ersten Ferritkern (22) überdeckten axialen Bereich.

7. Transformator nach mindestens einem der vorangegangenen Ansprüche,
**dadurch gekennzeichnet, dass**
der Flussleitkörper einen weiteren Ferritring aufweist, welcher koaxial zum Ringkern angeordnet ist und auf der vom ersten Ferritring (22) abgewandten Seite des Ringkerns angeordnet ist,
wobei der weitere Ferritring axial beabstandet ist vom Ringkern samt Primärwicklung (21) und Sekundärwicklung (21), insbesondere also der vom Ringkern samt Primärwicklung (21) und Sekundärwicklung (21) überdeckte axiale Bereich beabstandet ist von dem vom weiteren Ferritkern überdeckten axialen Bereich,
insbesondere
- wobei die Wandstärke des weiteren Ferritrings in axialer Richtung kleiner ist als in radialer Richtung
- und/oder wobei der vom weiteren Ferritkern überdeckte Radialabstandsbereich umfasst ist von dem vom Ringkern samt Primärwicklung (21) und Sekundärwicklung (21) überdeckten Radialabstandsbereich oder mit ihm überlappt.

8. Transformator nach mindestens einem der vorangegangenen Ansprüche,
**dadurch gekennzeichnet, dass**
der zweite Ferritring (23) aus einer Vielzahl von Ferritplatten zusammengesetzt ist, insbesondere welche jeweils tangential ausgerichtet sind, und dass
die Ferritplatten insbesondere mittels beidseitig klebendem Klebeband an jeweils ebenen Oberflächenbereichen, insbesondere Kontaktflächen, eines Trägerteils (46) des Transformators angeordnet sind.

9. **Transformator nach Anspruch 8,**
**dadurch gekennzeichnet, dass**
das Trägerteil (46), insbesondere als ein erstes Kunststoffspritzgussteil ausgeführt, an seinem vom ersten Ferritring (22) abgewandten axialen Endbereich einen radial hervorragenden Kragenbereich (44) aufweist, welcher mit einem Halteblech verbunden ist insbesondere mittels Schrauben.

10. **Transformator nach Anspruch 8 oder 9,**
**dadurch gekennzeichnet, dass**
das Trägerteil (46), insbesondere als ein erstes bzw. das erste Kunststoffspritzgussteil ausgeführt, den Ringkern samt Primärwicklung (21) und Sekundärwicklung (21) radial umgibt,
wobei ein Domabschnitt (43) eines Luftleitteils (42) des Transformators, insbesondere eines zweiten Kunststoffspritzgussteils, in den vom Ringkern radial umgebenen Raumbereich hineinragt, so dass ein von einem Lüfter (50) des Transformators geförderter Luftstrom an der Primärwicklung (21) und Sekundärwicklung (21) entlang geleitet wird,
insbesondere, in Abhängigkeit von Anspruch 9, wobei das Luftleitteil (42) mit dem Halteblech verbunden ist, insbesondere mittels einer Schraube.

11. Transformator nach mindestens einem der vorangegangenen Ansprüche,
**dadurch gekennzeichnet, dass**
an den Stirnseiten des Ringkerns Halteteile des Transformators angeordnet sind, welche jeweils axial hervorragende Abstützpfosten (90) aufweisen,
wobei die Windungen der Primärwicklung (21) und der Sekundärwicklung (21) in in Umfangsrichtung zwischen den Abstützpfosten (90) ausgebildeten Vertiefungen (91) geführt und/oder gehalten sind,
insbesondere wobei die Halteteile als Kunststoffringteile mit daran axial hervorragenden Abstützpfosten (90) ausgeformt sind, welche mit dem Luftleitteil (42), für die Abhängigkeit von Anspruch 10, oder dem Trägerteil (46), umfassend eine Lüfterhaube (47), für die Abhängigkeit von einem der Ansprüche 8-10, verbunden sind.

12. Transformator nach mindestens einem der vorangegangenen Ansprüche, mindestens jedoch abhängig von Anspruch 8,
**dadurch gekennzeichnet, dass**
das Halteblech wannenförmig und/oder trogförmig ausgeformt ist und an seinen Seitenflächen durchgehende Schlitze aufweist,
insbesondere wobei der Boden der Wanne oder des Trogs den Luftstrom zu den Seitenflächen hin umlenkt, insbesondere keine durchgehenden, den Luftstrom durchlassenden Ausnehmungen aufweist.

13. Transformator nach mindestens einem der vorangegangenen Ansprüche,
**dadurch gekennzeichnet, dass**
in Umfangsrichtung zwischen jeweiligen Teilwicklungen der Sekundärwicklung (21) angeordnete Windungen der Primärwicklung (21) eine jeweilige primärseitige Teilwicklung bilden, deren Anschlüsse aus dem Transformator herausgeführt sind,
wobei diese primärseitigen Teilwicklungen zueinander unterschiedliche Windungszahlen aufweisen und/oder in Serie geschaltet sind,
insbesondere wobei die Teilwicklungen der Sekundärwicklung (21) gleiche Windungszahlen aufweisen.

14. Transformator nach mindestens einem der vorangegangenen Ansprüche, mindestens jedoch abhängig von Anspruch 9,
**dadurch gekennzeichnet, dass**
an dem vom Kragenbereich (44) abgewandten axialen Endbereich des Trägerteils (46) eine Lüfterhaube (47) am Trägerteil (46) ausgeformt oder mit dem Trägerteil (46) verbunden ist, wobei die Lüfterhaube (47) den von einem Lüfter (50) geförderten Luftstrom nach radial innen konzentriert, insbesondere lenkt.

15. System zur elektrischen Versorgung einer Last, insbesondere Impedanz,
wobei das System einen von einem Wechselrichter (WR) des Systems gespeisten Transformator nach mindestens einem der vorangegangenen Ansprüche und eine Kapazität (C1) aufweist,
**dadurch gekennzeichnet, dass**
die Kapazität parallel zur Sekundärwicklung (21) des Transformators geschaltet ist,
wobei die Kapazität und die sekundärseitig konzentrierte Streufeldinduktivität des Transformators derart dimensioniert sind, dass die Resonanzfrequenz des so gebildeten Schwingkreises der Frequenz der von dem Wechselrichter dem Transformator zur Verfügung gestellten Wechselspannung insbesondere im Wesentlichen gleicht,
insbesondere wobei die Last ein in einer Anlage langgestreckt verlegte Primärleiterschleife, insbesondere ein in einer Anlage langgestreckt verlegter Primärleiter, ist, aus dem ein an eine Sekundärspule aufweisendes Fahrzeug induktiv mit elektrischer Leistung versorgbar ist.

## Claims

1. Transformer comprising a toroidal core (30),
wherein the transformer has a primary winding (21) and a secondary winding (21) which are wound on the toroidal core,
wherein the secondary winding (21) has part-windings (S1, S2),
wherein the part-windings are at a distance from one another, in particular at a regular distance from one another, in the circumferential direction of the toroidal core,
wherein the intermediate regions present between the part-windings in the circumferential direction comprise turns (P1, P2) of the primary winding (21),
wherein the transformer has a flux-concentrating member which is arranged outside the spatial region around which the primary winding (21) and the secondary winding (21) are wound, and arranged outside the toroidal core,
wherein the flux-concentrating member has a first ferrite ring (22) which is arranged coaxially with the toroidal core,
wherein the first ferrite ring (22) is axially at a distance from the toroidal core together with the primary winding (21) and the secondary winding (21),
wherein the wall thickness of the first ferrite ring (22) is smaller in the axial direction than in the radial direction,
wherein the flux-concentrating member has a second ferrite ring (23) which is arranged coaxially with the toroidal core,
wherein the wall thickness of the second ferrite ring (23) is smaller in the radial direction than in the axial direction,
wherein the radial-distance region covered by the second ferrite core is at a distance from the radial-distance region covered by the toroidal core together with the primary winding (21) and the secondary winding (21),
wherein the axial region covered by the second ferrite core is encompassed by, or overlaps with, the axial region covered by the toroidal core together with the primary winding (21) and the secondary winding (21).

2. Transformer according to claim 1,
**characterised in that**
the circumferential-angle regions covered by the turns of the primary winding (21), which are in particular each complete turns, only partly overlap with the circumferential-angle regions covered by the turns of the part-windings, which turns are in particular each complete turns, or do not overlap therewith at all.

3. Transformer according to at least one of the preceding claims,
**characterised in that**
the part-windings of the secondary winding (21) are electrically connected in series and/or in parallel, and/or **in that** the secondary winding (21) and the primary winding (21) are arranged in the same winding layer.

4. Transformer according to at least one of the preceding claims,
**characterised in that**
within each intermediate region, the turns of the primary winding (21) that are present in said intermediate region are arranged at a regular distance from one another in the circumferential direction.

5. Transformer according to at least one of the preceding claims,
**characterised in that**
the radial-distance region covered by the first ferrite core (22) is encompassed by, or overlaps with, the radial-distance region covered by the toroidal core together with the primary winding (21) and the secondary winding (21).

6. Transformer according to at least one of the preceding claims,
**characterised in that**
the axial region covered by the toroidal core together with the primary winding (21) and the secondary winding (21) is at a distance from the axial region covered by the first ferrite core (22).

7. Transformer according to at least one of the preceding claims,
**characterised in that**
the flux-concentrating member has a further ferrite ring which is arranged coaxially with the toroidal core and arranged on the side of the toroidal core facing away from the first ferrite ring (22),
the further ferrite ring being axially at a distance from the toroidal core together with the primary winding (21) and the secondary winding (21), the axial region covered by the toroidal core together with the primary winding (21) and the secondary winding (21) therefore in particular being at a distance from the axial region covered by the further ferrite core,
in particular
- the wall thickness of the further ferrite ring being smaller in the axial direction than in the radial direction
- and/or the radial-distance region covered by the further ferrite core being encompassed by, or overlapping with, the radial-distance region covered by the toroidal core together with the primary winding (21) and the secondary winding (21).

8. Transformer according to at least one of the preceding claims,
**characterised in that**
the second ferrite ring (23) is composed of a multiplicity of ferrite plates, which are in particular each oriented tangentially,
and **in that** the ferrite plates are arranged, in particular by means of double-sided adhesive tape, on surface regions, in particular contact surfaces, of a support part (46) of the transformer, each of said surface regions being planar.

9. Transformer according to claim 8,
**characterised in that**
the support part (46), configured in particular as a first plastics injection-moulded part, has, on its axial end region facing away from the first ferrite ring (22), a radially protruding collar region (44) that is connected to a retaining sheet in particular by means of screws.

10. Transformer according to claim 8 or claim 9,
**characterised in that**
the support part (46), configured in particular as a first or the first plastics injection-moulded part, radially encloses the toroidal core together with the primary winding (21) and the secondary winding (21),
a dome portion (43) of an air-guiding part (42) of the transformer, in particular a second plastics injection-moulded part, projecting into the spatial region radially enclosed by the toroidal core such that an air flow conveyed by a fan (50) of the transformer is conducted along the primary winding (21) and the secondary winding (21),
when dependent on claim 9, the air-guiding part (42) in particular being connected to the retaining sheet, in particular by means of a screw.

11. Transformer according to at least one of the preceding claims,
**characterised in that**
retaining parts of the transformer, each having axially protruding supporting uprights (90), are arranged on the end faces of the toroidal core,
the turns of the primary winding (21) and of the secondary winding (21) being guided and/or retained in depressions (91) formed between the supporting uprights (90) in the circumferential direction,
the retaining parts in particular being shaped as annular plastics parts having supporting uprights (90) axially protruding thereon, which, for the dependency on claim 10, are connected to the air-guiding part (42), or, for the dependency on any of claims 8-10, are connected to the support part (46), which comprises a fan cowl (47).

12. Transformer according to at least one of the preceding claims, but dependent at least on claim 8,
**characterised in that**
the retaining sheet is tub-shaped and/or trough-shaped and has through-slots in its side faces,
the bottom of the tub or trough in particular deflecting the air flow towards the side faces, the bottom in particular not having any through-recesses that let the air flow pass through.

13. Transformer according to at least one of the preceding claims,
**characterised in that**
turns of the primary winding (21) that are arranged in the circumferential direction between each part-winding of the secondary winding (21) form a respective primary-side part-winding, the terminals of which are led out of the transformer,
said primary-side part-windings having different numbers of turns from one another and/or being connected in series,
the part-windings of the secondary winding (21) in particular having the same number of turns.

14. Transformer according to at least one of the preceding claims, but dependent at least on claim 9,
**characterised in that**
on the axial end region of the support part (46) facing away from the collar region (44), a fan cowl (47) is shaped on the support part (46) or connected to the support part (46), the fan cowl (47) concentrating, in particular channelling, the air flow radially inwards, said air flow being conveyed by a fan (50).

15. System for supplying electrical power to a load, in particular an impedor,
the system having a transformer according to at least one of the preceding claims, fed from an inverter (WR) of the system, and a capacitor (C1),
**characterised in that**
the capacitor is connected in parallel with the secondary winding (21) of the transformer,
the capacitor and the leakage field inductance of the transformer, which is concentrated on the secondary side, being dimensioned such that the resonant frequency of the resonant circuit thus formed is in particular substantially equal to the AC voltage made available to the transformer by the inverter,
the load in particular being a primary conductor loop installed in an elongate manner in a facility, in particular a primary conductor that is installed in an elongate manner in a facility and from which a vehicle having a secondary coil can be inductively supplied with electrical power.

## Revendications

1. Transformateur à noyau toroïdal (30),
le transformateur présentant un enroulement primaire (21) et un enroulement secondaire (21) qui sont enroulés sur le noyau toroïdal,
l'enroulement secondaire (21) présentant des enroulements partiels (S1, S2),
les enroulements partiels étant espacés les uns des autres, en particulier régulièrement espacés les uns des autres, dans la direction circonférentielle du noyau toroïdal,
les zones intermédiaires présentes dans la direction circonférentielle entre les enroulements partiels présentent des spires (P1, P2) de l'enroulement primaire (21),
le transformateur présentant un corps conducteur de flux qui est disposé à l'extérieur de la zone d'espace entourée par l'enroulement primaire (21) et par l'enroulement secondaire (21) et à l'extérieur du noyau toroïdal,
le corps conducteur de flux présentant un premier anneau de ferrite (22) qui est disposé coaxialement au noyau toroïdal,
le premier anneau de ferrite (22) étant espacé axialement du noyau toroïdal avec l'enroulement primaire (21) et l'enroulement secondaire (21),
l'épaisseur de paroi du premier anneau de ferrite (22) étant plus petite dans la direction axiale que dans la direction radiale,
le corps conducteur de flux présentant un deuxième anneau de ferrite (23) qui est disposé coaxialement au noyau toroïdal,
l'épaisseur de paroi du deuxième anneau de ferrite (23) étant plus petite dans la direction radiale que dans la direction axiale,
la zone de distance radiale couverte par le deuxième noyau de ferrite étant espacée de la zone de distance radiale couverte par le noyau toroïdal avec l'enroulement primaire (21) et l'enroulement secondaire (21),
la zone axiale couverte par le deuxième noyau de ferrite étant comprise dans la zone axiale couverte par le noyau toroïdal avec l'enroulement primaire (21) et l'enroulement secondaire (21) ou se chevauche avec celle-ci.

2. Transformateur selon la revendication 1,
**caractérisé en ce que**
les zones angulaires circonférentielles couvertes par les spires, en particulier chaque fois complètes, de l'enroulement primaire (21) ne se chevauchent que partiellement ou pas du tout avec les zones angulaires circonférentielles couvertes par les spires, en particulier chaque fois complètes, des enroulements partiels.

3. Transformateur selon au moins l'une des revendications précédentes,
**caractérisé en ce que**
les enroulements partiels de l'enroulement secondaire (21) sont montés électriquement en série ou en parallèle
et/ou **en ce que** l'enroulement secondaire (21) et l'enroulement primaire (21) sont disposés dans la même couche d'enroulement.

4. Transformateur selon au moins l'une des revendications précédentes,
**caractérisé en ce que**
à l'intérieur de la zone intermédiaire respective, les spires de l'enroulement primaire (21) qui y sont présentes sont régulièrement espacées les unes des autres dans la direction circonférentielle.

5. Transformateur selon au moins l'une des revendications précédentes,
**caractérisé en ce que**
la zone de distance radiale couverte par le premier noyau de ferrite (22) est comprise dans la zone de distance radiale couverte par le noyau toroïdal avec l'enroulement primaire (21) et l'enroulement secondaire (21) ou se chevauche avec celle-ci.

6. Transformateur selon au moins l'une des revendications précédentes,
**caractérisé en ce que**
la zone axiale couverte par le noyau toroïdal avec l'enroulement primaire (21) et l'enroulement secondaire (21) est espacée de la zone axiale couverte par le premier noyau de ferrite (22).

7. Transformateur selon au moins l'une des revendications précédentes,
**caractérisé en ce que**
le corps conducteur de flux présente un autre anneau de ferrite qui est disposé coaxialement au noyau toroïdal et sur le côté du noyau toroïdal opposé au premier anneau de ferrite (22),
l'autre anneau de ferrite étant espacé axialement du noyau toroïdal avec l'enroulement primaire (21) et l'enroulement secondaire (21), en particulier la zone axiale couverte par le noyau toroïdal avec l'enroulement primaire (21) et l'enroulement secondaire (21) étant espacée de la zone axiale couverte par l'autre noyau de ferrite,
en particulier
- l'épaisseur de paroi de l'autre anneau de ferrite étant plus petite dans la direction axiale que dans la direction radiale
- et/ou la zone de distance radiale couverte par l'autre noyau de ferrite étant comprise dans la zone de distance radiale couverte par le noyau toroïdal avec l'enroulement primaire (21) et l'enroulement secondaire (21) ou se chevauche avec celle-ci.

8. Transformateur selon au moins l'une des revendications précédentes,
**caractérisé en ce que**
le deuxième anneau de ferrite (23) est composé d'une pluralité de plaques de ferrite, qui sont en particulier orientées chacune tangentiellement,
et **en ce que** les plaques de ferrite sont disposées, en particulier au moyen d'un ruban adhésif sur les deux faces, sur des zones de surface planes respectives, en particulier des surfaces de contact, d'une pièce de support (46) du transformateur.

9. Transformateur selon la revendication 8,
**caractérisé en ce que**
la pièce de support (46), réalisée en particulier sous la forme d'une première pièce en matière plastique moulée par injection, présente dans sa zone d'extrémité axiale opposée au premier anneau en ferrite (22) une zone de collerette (44) faisant saillie radialement, qui est reliée à une tôle de maintien, en particulier au moyen de vis.

10. Transformateur selon la revendication 8 ou 9,
**caractérisé en ce que**
la pièce de support (46), réalisée en particulier sous la forme d'une première ou de la première pièce en matière plastique moulée par injection, entoure radialement le noyau toroïdal avec l'enroulement primaire (21) et l'enroulement secondaire (21),
une partie en dôme (43) d'une pièce de guidage d'air (42) du transformateur, en particulier d'une deuxième pièce en matière plastique moulée par injection, faisant saillie dans la zone d'espace entourée radialement par le noyau toroïdal, de sorte qu'un courant d'air transporté par un ventilateur (50) du transformateur est dirigé le long de l'enroulement primaire (21) et de l'enroulement secondaire (21),
en particulier, en fonction de la revendication 9, la pièce de guidage d'air (42) étant reliée à la tôle de maintien, en particulier au moyen d'une vis.

11. Transformateur selon au moins l'une des revendications précédentes,
**caractérisé en ce que**
des pièces de maintien du transformateur sont disposées sur les faces frontales du noyau toroïdal, lesquelles présentent chacune des montants d'appui (90) faisant saillie axialement,
les spires de l'enroulement primaire (21) et de l'enroulement secondaire (21) étant guidées et/ou maintenues dans des renfoncements (91) formés dans la direction circonférentielle entre les montants d'appui (90),
en particulier, les pièces de maintien étant des pièces annulaires en matière plastique avec des montants d'appui (90) qui en font saillie axialement et qui sont reliés à la pièce de guidage d'air (42), pour la dépendance de la revendication 10, ou à la pièce de support (46), comprenant un carénage de ventilateur (47), pour la dépendance de l'une des revendications 8 à 10.

12. Transformateur selon au moins l'une des revendications précédentes, mais au moins dépendant de la revendication 8,
**caractérisé en ce que**
la tôle de maintien est conformée en forme de cuvette et/ou d'auge et présente des fentes continues sur ses surfaces latérales,
en particulier le fond de la cuvette ou de l'auge déviant le courant d'air vers les surfaces latérales, en particulier ne présentant pas d'évidements continus laissant passer le courant d'air.

13. Transformateur selon au moins l'une des revendications précédentes,
**caractérisé en ce que**
des spires de l'enroulement primaire (21) disposées dans la direction circonférentielle entre des enroulements partiels respectifs de l'enroulement secondaire (21) forment un enroulement partiel côté primaire respectif, dont les connexions sortent du transformateur, ces enroulements partiels côté primaire présentant des nombres de spires différents les uns des autres et/ou étant montés en série,
en particulier les enroulements partiels de l'enroulement secondaire (21) présentant des nombres de spires identiques.

14. Transformateur selon au moins l'une des revendications précédentes, mais au moins dépendant de la revendication 9,
**caractérisé en ce que**
dans la zone d'extrémité axiale de la pièce de support (46) opposée à la zone de collerette (44), un carénage de ventilateur (47) est formé sur la pièce de support (46) ou est relié à la pièce de support (46), le carénage de ventilateur (47) concentrant, en particulier dirigeant, le courant d'air transporté par un ventilateur (50) vers l'intérieur dans la direction radiale.

15. Système d'alimentation électrique d'une charge, en particulier d'une impédance,
le système présentant un transformateur selon au moins l'une des revendications précédentes alimenté par un onduleur (WR) du système et une capacité (C1),
**caractérisé en ce que**
la capacité est montée en parallèle avec l'enroulement secondaire (21) du transformateur,
la capacité et l'inductance de champ de fuite concentrée côté secondaire du transformateur étant dimensionnées de manière à ce que la fréquence de résonance du circuit oscillant ainsi formé soit en particulier sensiblement égale à la fréquence de la tension alternative fournie au transformateur par l'onduleur,
en particulier la charge étant une boucle de conducteur primaire posée de manière allongée dans une installation, en particulier un conducteur primaire posé de manière allongée dans une installation, à partir duquel un véhicule présentant une bobine secondaire peut être alimenté en puissance électrique par induction.
